(19) Europäisches Patentamt
European Patent Office
Office européen des brevets

(11) **EP 1 996 450 B1**

(12) **FASCICULE DE BREVET EUROPEEN**

(45) Date de publication et mention
de la délivrance du brevet:
**08.06.2011 Bulletin 2011/23**

(21) Numéro de dépôt: **07712531.8**

(22) Date de dépôt: **15.03.2007**

(51) Int Cl.:
**B62K 25/28** *(2006.01)*    **B62K 25/30** *(2006.01)*

(86) Numéro de dépôt international:
**PCT/EP2007/052474**

(87) Numéro de publication internationale:
**WO 2007/104795 (20.09.2007 Gazette 2007/38)**

(54) **SUSPENSION ARRIERE DE BICYCLETTE**

HINTERRADAUFHÄNGUNG FÜR FAHRRAD

BICYCLE REAR SUSPENSION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.03.2006 FR 0602271**

(43) Date de publication de la demande:
**03.12.2008 Bulletin 2008/49**

(73) Titulaire: **Cycles Lapierre**
**21000 Dijon (FR)**

(72) Inventeur: **ANTONOT, EMMANUEL**
**F-21490 Clenay (FR)**

(74) Mandataire: **Cabinet Plasseraud**
**Immeuble le Rhone-Alpes**
**235 Cours Lafayette**
**69006 Lyon (FR)**

(56) Documents cités:
**EP-A- 1 026 073      WO-A-98/18671**
**WO-A1-02/070332      DE-A1- 4 435 482**
**DE-A1- 19 802 429      DE-A1-102004 032 054**
**FR-A1- 2 774 966      US-A- 5 409 249**

## Description

La présente invention concerne un perfectionnement à une suspension arrière d'un véhicule tel qu'une bicyclette, une moto ou analogue, du type comportant un châssis, un bras oscillant solidaire du cadre et portant l'axe du moyeu d'une roue arrière motrice et un amortisseur dont les extrémités sont solidaires respectivement du cadre et du bras oscillant ou d'une biellette, ladite suspension procurant un effet dit anti-pompage.

On connaît bien des vélos tout terrain dit VTT comportant une suspension arrière constituée d'un bras oscillant articulé au niveau de la partie inférieure du tube de selle coopérant avec un amortisseur. Ledit bras oscillant pivote autour d'un axe fixe parallèle à l'axe du pignon menant qui est porté par le boîtier de pédalier positionné à l'extrémité inférieure du cadre, c'est-à-dire à l'intersection du tube oblique et du tube de selle de ce dernier.

Par ailleurs, les extrémités de l'amortisseur sont solidaires du bras oscillant et respectivement du tube horizontal reliant le tube de selle à la fourche du vélo ou d'un tube intermédiaire s'étendant globalement du boîtier de pédalier au tube horizontal, ledit tube de selle étant interrompu pour laisser le passage à l'amortisseur.

Ce type de suspension arrière provoque sous l'action d'un coup de pédale énergique tel qu'un coup de pédale pour relancer le vélo ou lorsque le cycliste adopte la position dite en danseuse debout sur les pédales, un effet dit de pompage qui se traduit par un enfoncement cyclique de la suspension même sur un sol parfaitement nivelé. Ce type de suspension arrière présente donc l'inconvénient de dissiper une partie du couple moteur fourni par le cycliste dans l'amortisseur au lieu de participer à la motricité du vélo.

On connaît également des vélos tout terrain dit VTT dont la suspension arrière est constituée d'un bras oscillant articulé au tube de selle et/ou au tube oblique du cadre au moyen de deux biellettes ou similaires, ledit bras oscillant ou au moins l'une des biellettes coopérant avec un amortisseur. Ledit bras oscillant pivote ainsi autour d'un point de pivot virtuel mobile, également appelé centre instantané de rotation, qui correspond à l'intersection des droites passant par les axes respectifs des biellettes.

C'est le cas de la demande de brevet américain US 2002/0109332, par exemple, qui décrit une telle suspension arrière de vélo. Le centre instantané se déplace dans le quadrant antérieur inférieur et se déplace d'avant en arrière et de haut en bas lorsque le bras oscillant se déplace vers le haut lors du franchissement d'un obstacle tel qu'une bosse par exemple. Le document WO-A-9818671 montre une suspension arrière de vélo ayant les caractéristiques techniques du préambule de la revendication 1.

De telles suspensions arrières à centre instantané de rotation, également appelé point de pivot virtuel, présentent l'inconvénient de procurer un effet dit de pompage.

L'un des buts de l'invention est donc de remédier à cet inconvénient en proposant une suspension arrière d'un véhicule tel qu'un VTT ou similaire de conception simple et peu onéreuse procurant un effet anti-pompage.

A cet effet, et conformément à l'invention, il est proposé une suspension arrière d'un vélocipède telle que définie dans la revendication 1.

D'autres avantages et caractéristiques ressortiront mieux de la description qui va suivre de plusieurs variantes d'exécution, données à titre d'exemples non limitatifs, de la suspension arrière conforme à l'invention, en référence aux dessins annexés sur lesquels :

- la figure 1 est une vue de côté partielle d'une bicyclette équipée d'une suspension arrière conforme à l'invention, seul le cadre et le bras oscillant étant représentés,
- la figure 2 est une représentation schématique d'une bicyclette équipée de la suspension arrière suivant l'invention représentée sur la figure 1,
- la figure 3 est une représentation schématique d'une bicyclette équipée d'une variante d'exécution de la suspension arrière suivant l'invention,
- la figure 4 une représentation schématique du cadre d'une bicyclette équipée d'une autre variante d'exécution de la suspension arrière suivant l'invention,
- la figure 5 est une courbe représentant la trajectoire de la roue arrière de la bicyclette équipée d'une suspension arrière suivant l'invention lorsque la roue arrière rencontre un obstacle,
- la figure 6 est une courbe représentant la longueur de la ligne de chaîne CSL en fonction du débattement D de la roue arrière lorsque cette dernière rencontre un obstacle,
- la figure 7 est une courbe représentant la dérivée première de la longueur de chaîne CSL en fonction du débattement D de la roue arrière,
- la figure 8 est une courbe représentant la dérivée seconde de la longueur de chaîne CSL en fonction du débattement D de la roue arrière.

On décrira ci-après à titre d'exemple non limitatif une suspension arrière d'une bicyclette de type vélo tout terrain (VTT) ; néanmoins, la suspension arrière suivant l'invention pourrait être adaptée à tout autre véhicule sans pour autant sortir du cadre de l'invention.

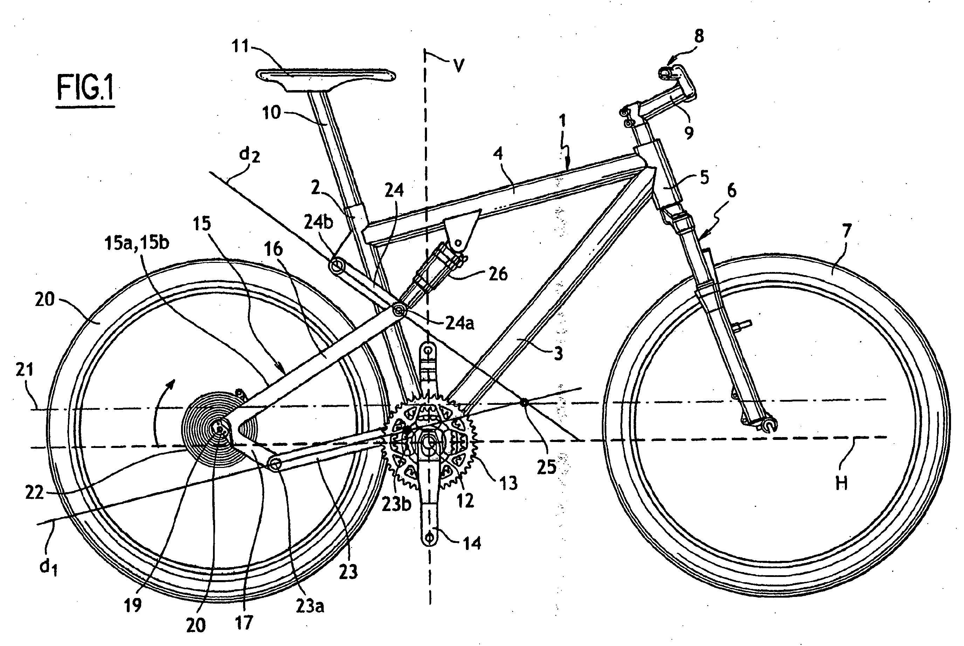

En référence à la figure 1, le VTT comprend un châssis 1 dit cadre triangulé constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement à un tube de fourche 5 globalement vertical, le tube oblique 3 étant, par ailleurs, solidarisé audit tube de fourche 5 également par soudage. Ce tube de fourche 5 reçoit une fourche 6 du type télescopique portant à son extrémité inférieure l'axe du moyeu de la roue avant 7 du VTT. Un guidon 8 est de manière classique solidarisé à l'extrémité distale d'une potence 9 solidaire de l'extrémité supérieure de la fourche 6 pour assurer la direction du VTT.

Le tube de selle 2 est apte à recevoir une tige de selle 10 comprenant à son extrémité supérieure une selle 11 sur laquelle prend position le cycliste.

Il va de soi que les différents tubes de selle 2, oblique 3, horizontal 4 et de fourche 5 du cadre 1 peuvent être assemblés par tout moyen approprié bien connu par l'homme du métier tel que par collage et/ou par emboîtement par exemple.

L'extrémité inférieure dudit tube de selle 2, c'est-à-dire l'intersection du tube oblique 3 et dudit tube de selle 2, comporte un boîtier de pédalier 12 portant de manière classique l'axe des pignons menant 13 communément appelés plateaux dont les axes de rotation sont coaxiaux. Des pédales 14 sont solidaires de l'axe des pignons menant 13 de part et d'autre du cadre 1 du VTT.

Ledit VTT comporte, par ailleurs, un bras oscillant 15 constitué de deux ensembles 15a, 15b en forme de V s'étendant de part et d'autre du plan médian du cadre 1. Lesdits ensembles 15a, 15b sont reliés par une ou plusieurs entretoises non représentées sur la figure 1. Chaque ensemble 15a, 15b du bras oscillant 15 est constitué d'un tube oblique dit hauban 16 et d'un tube inférieur 17 connectés deux à deux par des soudures. L'intersection du hauban 16 et du tube inférieur 17 porte l'axe du moyeu 19 de la roue arrière 20.

De manière classique ladite roue arrière 20 est entraînée en rotation par une chaîne de transmission 21 s'étendant entre le pignon menant 13 du boîtier de pédalier 12 et le pignon mené 22 porté par l'axe du moyeu 19 de la roue arrière 20 motrice, lorsque le cycliste pédale.

Il va de soi que le bras oscillant 15 peut présenter une forme quelconque telle qu'une forme triangulaire ou globalement rectiligne sans sortir du cadre de l'invention.

Ledit bras oscillant 15 est solidarisé au cadre 1 par deux moyens d'articulation 23 et 24.

Le premier moyen d'articulation 23 consiste en une biellette dite inférieure 23 dont les axes de rotation 23a et 23b positionnés aux extrémités libres de ladite biellette 23 sont respectivement articulés à l'extrémité distale du tube inférieur 17 du bras oscillant 15 et au tube de selle 2 à proximité du boîtier de pédalier 12. Cette biellette inférieure 23 s'étend globalement horizontalement à l'arrière du tube de selle 2 du cadre 1 du VTT lorsque ce dernier est en position d'équilibre statique, c'est-à-dire lorsqu'un cycliste de poids moyen prend position sur la selle du VTT. On entend par cycliste de poids moyen un cycliste d'un poids quelconque pour lequel un amortisseur a été réglé en fonction de son poids conformément aux recommandations du constructeur. Plus précisément, ladite biellette inférieure 23 est légèrement inclinée de haut en bas et d'avant en arrière en formant un angle α, compris entre 0 et 10°, et de préférence d'environ 5°, avec l'horizontale H représentée en traits pointillés sur la figure 1.

Le second moyen d'articulation 24 consiste en une biellette dite supérieure 24 dont les axes de rotation 24a et 24b positionnés aux extrémités libres de ladite biellette supérieure 24 sont respectivement articulés à l'extrémité distale du hauban 16 du bras oscillant 15 et au tube de selle 2 en dessous du tube horizontal 4 du cadre 1. Cette biellette supérieure 24 s'étend globalement verticalement entre le tube de selle 2 et le tube oblique 3 du cadre 1 du VTT lorsque ce dernier est en position d'équilibre statique. Plus précisément, ladite biellette supérieure 24 est inclinée de haut en bas et d'arrière en avant en formant un angle, compris entre 30 et 60°, et de préférence d'environ 45°, avec la verticale V représentée en traits pointillés sur la figure 1.

L'orientation de la biellette inférieure 23 et de la biellette supérieure 24 correspond à la position d'équilibre statique telle que représentée sur la figure 1.

Il est bien évident que, lorsque le vélo est à vide, l'orientation des biellettes 23 et 24 peut différer d'un angle pouvant atteindre 5° par rapport à l'orientation desdites biellettes 23 et 24 en position d'équilibre statique.

Le centre instantané de rotation 25 défini par l'intersection des droite $d_1$ et $d_2$ passant respectivement par les axes 23a, 23b de la biellette inférieure 23 et par les axes 24a, 24b de la biellette supérieure 24 est situé dans le quadrant antérieur supérieur du cadre 1.

En position d'équilibre statique, telle que représentée sur la figure 1, ledit centre instantané de rotation 25 se situe sur la droite prolongeant le brin tendu supérieure de la chaîne de transmission 21.

Par ailleurs, lorsque la roue arrière 20 rencontre un obstacle, le bras oscillant 15 se déplace vers le haut entraînant en rotation la biellette inférieure 23 dans le sens des aiguilles d'une montre et la biellette supérieure 24 dans le sens inverse des aiguilles d'une montre. Le centre instantané de rotation 25 se déplace alors vers l'avant le long d'une trajectoire légèrement curviligne, c'est-à-dire une trajectoire curviligne présentant un grand rayon de courbure, dont la concavité est orientée vers le haut.

On observera que, en fonction du rapport des longueurs des biellettes inférieure 23 et supérieure 24, de la position desdites biellettes 23 et 24 en position d'équilibre statique, notamment, le centre instantané de rotation 25 pourra se déplacer le long d'une trajectoire globalement rectiligne et horizontale.

Par ailleurs, il va de soi que le centre instantané de rotation 25 pourra, en position d'équilibre statique, se situer à proximité du brin tendu supérieur de la chaîne de transmission 21, ou de la droite prolongeant ledit brin tendu de la chaîne 21, c'est-à-dire se situer juste au dessus ou juste en dessous du brin tendu supérieur de la chaîne de transmission 21, ou de la droite la prolongeant.

Enfin, le VTT comprend un amortisseur 26 dont les extrémités libres sont solidaires respectivement du tube horizontal 4 et de l'extrémité distale du hauban 16 du bras oscillant 15 ou de la biellette supérieure 24.

Il va de soi que le réglage de l'amortisseur s'effectuera en fonction du poids du cycliste. Ce réglage consiste usuellement à adapter la pression de l'amortisseur en fonction du poids de telle sorte que ledit amortisseur soit dans sa position de « sag » lorsque le cycliste prend position sur la bicyclette. On entend par « sag » la position d'enfoncement minimal de l'amortisseur.

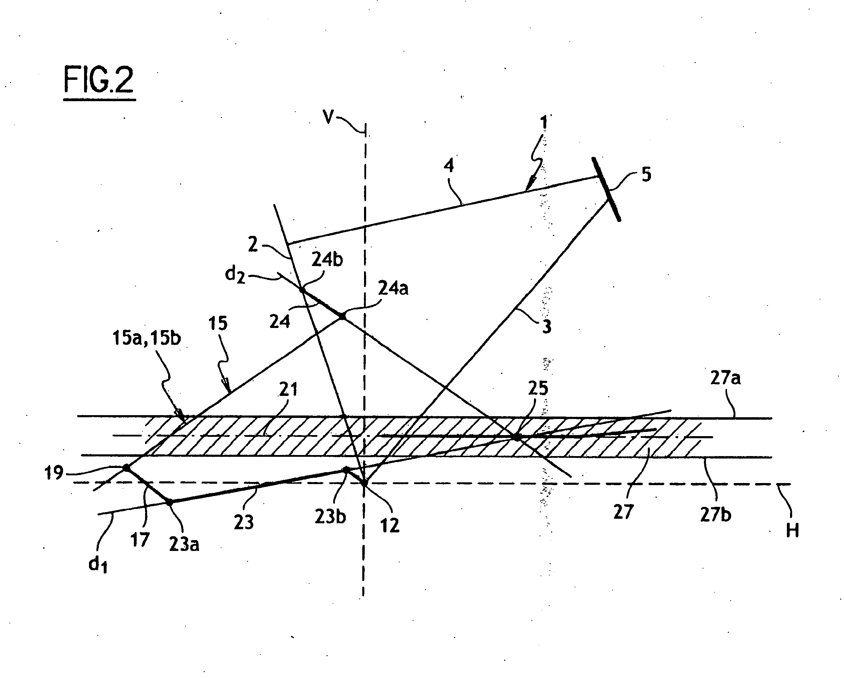

On expliquera maintenant le fonctionnement du VTT équipé de la suspension arrière suivant l'invention en référence aux figures 1 et 2.

En position d'équilibre statique, le centre instantané de rotation 25 se situe sur la droite prolongeant le brin tendu supérieur de la chaîne de transmission 21 dans le quadrant antérieur supérieur comme on l'a vu précédemment.

Lorsque l'axe du moyeu 19 de la roue arrière 20 se déplace vers le haut, comme l'indique la flèche sur la figure 1, la biellette inférieure 23 pivote dans le sens des aiguilles'd'une montre et la biellette supérieure 24 pivote dans le sens opposé. Le centre instantané de rotation 25 se déplace alors vers l'avant le long d'une trajectoire globalement horizontale et légèrement curviligne dont la concavité est orientée vers le haut. Le centre instantané de rotation 25 se déplace à l'intérieur d'une bande 27 horizontale, ladite bande 27 étant délimitée par une droite supérieure 27a et une droite inférieure 27b s'étendant au dessus et respectivement en dessous du brin tendu supérieur de la chaîne 21, ou de la droite la prolongeant, en position d'équilibre statique.

On observera que, dans cet exemple particulier de réalisation, le brin tendu supérieur de la chaîne de transmission 21 et la bande 27 dans laquelle se déplace le centre instantané de rotation s'étendent horizontalement. Toutefois, il est bien évident que le brin tendu supérieur de la chaîne 21 et, par conséquent, la bande 27 pourront être inclinés sans pour autant sortir du cadre de l'invention.

La distance séparant la droite supérieure 27a de la droite inférieure 27b de la bande 27 est inférieure ou égale à la moitié, et de préférence inférieure ou égale au quart, du débattement vertical maximal du moyeu 19 de la roue arrière 20. Le débattement vertical du moyeu 19 de la roue arrière 20 d'un VTT étant généralement compris entre 80mm et 200mm, la distance séparant les droites supérieure 27a et inférieure 27b de la bande 27 est comprise entre 40 et 100mm, et de préférence entre 20 et 50mm.

Par ailleurs, lorsque l'axe du moyeu 19 de la roue arrière 20 se déplace vers le haut, le brin tendu supérieur de la chaîne de transmission 21 et la droite la prolongeant pivote autour de l'axe du boîtier de pédalier 12 et s'incline progressivement de haut en bas et d'arrière en avant.

Ainsi, lorsque l'axe du moyeu 19 de la roue arrière 20 se déplace vers le haut, le centre instantané de rotation 25 se déplace le long de sa trajectoire horizontale et se situe au dessus du brin tendu de la chaîne de transmission 21 ou de la droite la prolongeant.

De la sorte, la distance entre ledit centre instantané de rotation 25 et le brin tendu supérieur de la chaîne de transmission 21, ou la droite la prolongeant, augmente lorsque le bras oscillant 15 se déplace vers le haut. On entend par distance, la longueur du segment normal, c'est-à-dire orthogonal, au brin tendu de la chaîne 21 ou à la droite prolongeant ledit brin tendu, séparant le centre instantané de rotation 25 du brin tendu supérieur de la chaîne 21 ou la droite la prolongeant. Cette distance augmente globalement de manière linéaire.

Toutefois, il est bien évident que, pour des longueurs de biellettes 23,24 particulières, ladite distance peut augmenter de manière non linéaire sans pour autant sortir du cadre de l'invention.

Ainsi, lors du pédalage, un moment de rappel proportionnel d'une part à la tension du brin tendu supérieur de la chaîne de la transmission 21 et d'autre part à la distance séparant le centre instantané de rotation 25 du brin supérieur de la chaîne de transmission 21 ou de la droite la prolongeant se crée. Ce moment de rappel tend à ramener le bras oscillant 15 dans sa position d'équilibre statique.

Par conséquent, le moment de rappel du bras oscillant 15 vers sa position d'équilibre statique s'oppose, quelque soit son sens, et à chaque instant, à la naissance du mouvement oscillatoire parasite dit de pompage créé par le mouvement de pédalage du cycliste.

Par ailleurs, on observera que, en position d'équilibre statique, ce qui correspond à un pédalage sur un terrain plat, le centre instantané de rotation 25 se situant sur le brin tendu supérieur de la chaîne de transmission 21, le pédalage du cycliste n'induit aucun moment de sorte que le bras oscillant 15 reste dans sa position d'équilibre statique.

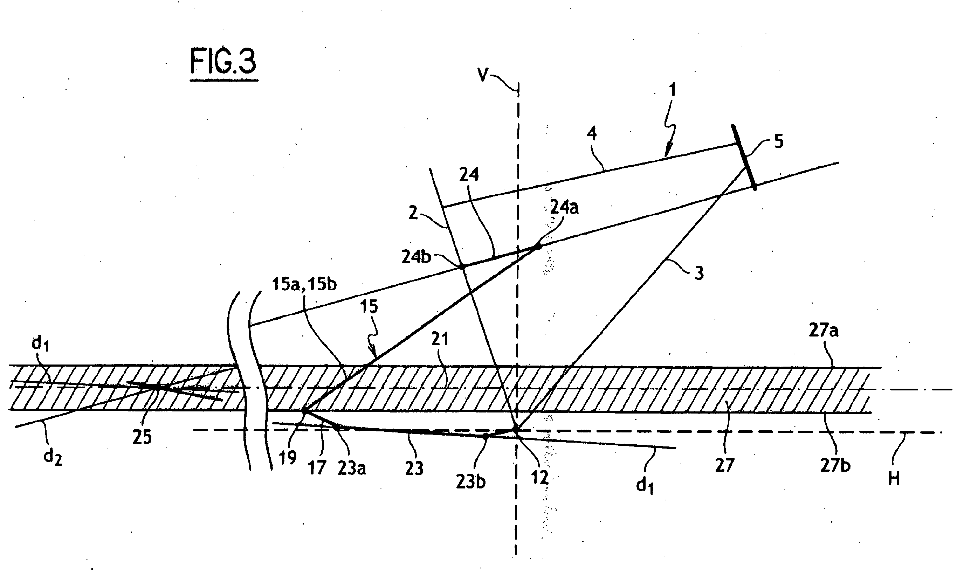

Selon une variante d'exécution du VTT équipée d'une suspension arrière conforme à l'invention, en référence à la figure 3, la biellette supérieure 24 inclinée de haut en bas et d'arrière en avant en formant un angle, compris entre 30 et 60°, et de préférence d'environ 45°, avec la verticale V, a été substituée par une biellette 24 s'étendant globalement horizontalement. Néanmoins, cette biellette supérieure 24 est légèrement inclinée de haut en bas et d'avant en arrière en formant un angle d'environ 85° avec la vertical V et elle ne s'étend pas parallèlement à la biellette inférieure 23.

Le centre instantané de rotation 25 défini par l'intersection des droites $d_1$ et $d_2$ passant respectivement par les axes 23a,23b de la biellette inférieure 23 et par les axes 24a,24b de la biellette supérieure 24 est situé dans le quadrant postérieur supérieur du cadre 1.

En position d'équilibre statique, telle que représentée sur la figure 3, ledit centre instantané de rotation 25 se situe sur la droite prolongeant le brin tendu supérieure de la chaîne de transmission 21.

Par ailleurs, lorsque la roue arrière 20 rencontre un obstacle, le bras oscillant 15 se déplace vers le haut entraînant en rotation la biellette inférieure 23 dans le sens des aiguilles d'une montre et la biellette supérieure 24 dans le sens inverse des aiguilles d'une montre. Le centre instantané de rotation 25 se déplace alors, sous le brin tendu supérieur de la chaîne de transmission 21, à l'arrière du moyeu 19 de la roue arrière 20, vers l'avant le long d'une trajectoire légèrement curviligne, c'est-à-dire une trajectoire curviligne présentant un grand rayon de courbure, dont la concavité est orientée vers le haut.

On observera que, en fonction du rapport des longueurs des biellettes inférieure 23 et supérieure 24, de la position desdites biellettes 23 et 24 en position d'équilibre statique, notamment, le centre instantané de rotation 25 pourra se déplacer, à l'arrière du moyeu 19 de la roue arrière 20, en avant ou en arrière le long d'une trajectoire globalement rectiligne et horizontale.

Par ailleurs, il va de soi que le centre instantané de rotation 25 pourra, en position d'équilibre statique, se situer à proximité du brin tendu supérieur de la chaîne de transmission 21, ou de la droite prolongeant ledit brin tendu de la chaîne 21, c'est-à-dire se situer juste au dessus ou juste en dessous du brin tendu supérieur de la chaîne de transmission 21, ou de la droite la prolongeant.

De la même manière que précédemment, la distance entre ledit centre instantané de rotation et le brin tendu supérieur de la chaîne de transmission 21, ou la droite la prolongeant, augmente lorsque le bras oscillant 15 se déplace vers le haut de sorte qu'un moment de rappel proportionnel d'une part à la tension du brin tendu supérieur de la chaîne de la transmission 21 et d'autre part à la distance séparant le centre instantané de rotation 25 du brin supérieur de la chaîne de transmission 21 ou de la droite la prolongeant se crée, ledit moment de rappel tendant à ramener le bras oscillant 15 dans sa position d'équilibre statique lors du pédalage.

Par ailleurs, il est bien évident que le bras oscillant 15 peut consister dans un bras de forme quelconque tel qu'un bras globalement rectiligne, par exemple, sans pour autant sortir du cadre de l'invention.

De plus, le cadre 1 peut également présenter une forme quelconque telle qu'une forme de V couché ou une forme de L couché par exemple.

Les biellettes inférieure 23 et supérieure 24 formant les moyens d'articulation du bras oscillant 15 sur le cadre 1 pourront être substituées par tout moyen équivalent tel qu'un excentrique ou un guide coulissant sur un rail par exemple.

Au moins un des moyens d'articulation 23,24 peut suivre une trajectoire curviligne dont le rayon de courbure croît et ou décroît, ladite trajectoire curviligne se superposant avec un segment de spirale, de parabole, d'hyperbole ou similaire, le rayon de courbure croissant et/ou décroissant linéairement ou de manière non linéaire.

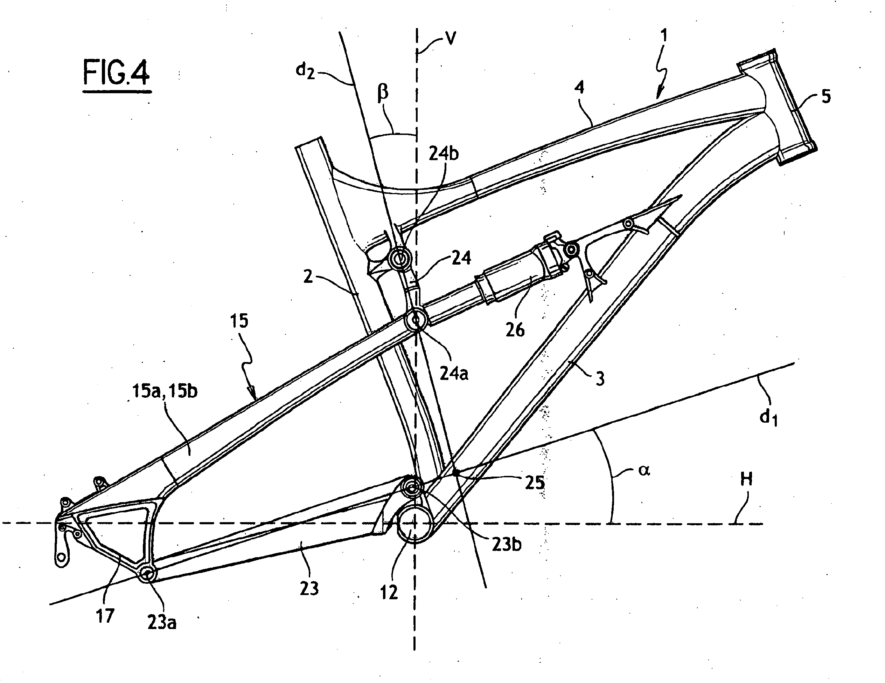

Selon une seconde variante d'exécution, en référence à la figure 4, le VTT comprend de la même manière que précédemment un châssis 1 dit cadre triangulé constitué d'un tube de selle 2 globalement vertical, d'un tube oblique 3 assemblé par soudage à l'extrémité inférieure du tube de selle 2 et d'un tube horizontal 4 dont les extrémités sont assemblées par soudage à l'extrémité supérieure du tube de selle 2 et respectivement à un tube de fourche 5 globalement vertical, le tube oblique 3 étant, par ailleurs, solidarisé audit tube de fourche 5 également par soudage.

Ledit VTT comporte, par ailleurs, un bras oscillant 15 constitué de deux ensembles 15a, 15b en forme de V s'étendant de part et d'autre du plan médian du cadre 1. Chaque ensemble 15a, 15b du bras oscillant 15 est constitué d'un tube oblique dit hauban 16 et d'un tube inférieur 17 connectés deux à deux par des soudures. L'intersection du hauban 16 et du tube inférieur 17 porte l'axe du moyeu de la roue arrière non représentée sur la figure 4.

Ledit bras oscillant 15 est solidarisé au cadre 1 par deux moyens d'articulation 23 et 24.

Le premier moyen d'articulation 23 consiste en une biellette dite inférieure 23 dont les axes de rotation 23a et 23b positionnés aux extrémités libres de ladite biellette 23 sont respectivement articulés à l'extrémité distale du tube inférieur 17 du bras oscillant 15 et au tube de selle 2 à proximité du boîtier de pédalier 12, juste au dessus de ce dernier. Cette biellette inférieure 23 s'étend globalement horizontalement à l'arrière du tube de selle 2 du cadre 1 du VTT lorsque ce dernier est en position d'équilibre statique, c'est-à-dire lorsqu'un cycliste de poids moyen prend position sur la selle du VTT. Plus précisément, ladite biellette inférieure 23 est légèrement inclinée de haut en bas et d'avant en arrière en formant un angle α, compris entre 10 et 30°, et de préférence d'environ 20°, avec l'horizontale H représentée en traits pointillés sur la figure 1.

Le second moyen d'articulation 24 consiste en une biellette dite supérieure 24 dont les axes de rotation 24a et 24b positionnés aux extrémités libres de ladite biellette supérieure 24 sont respectivement articulés à l'extrémité distale du hauban 16 du bras oscillant 15 et au cadre 1. L'axe de rotation 24b de la biellette 24 est articulé à l'intersection du tube de selle 2 et du tube horizontal au moyen de pattes. Cette biellette supérieure 24 s'étend globalement verticalement entre le tube de selle 2, le tube horizontal 4 et le tube oblique 3 du cadre 1 du VTT lorsque ce dernier est en position d'équilibre statique. Plus précisément, ladite biellette supérieure 24 est inclinée de haut en bas et d'arrière en avant en formant un angle β compris entre 10 et 20°, et de préférence d'environ 10°, avec la verticale V représentée en traits pointillés sur la figure 4.

Le cadre 1 de VTT suivant l'invention représenté sur la figure 4 est en position « à vide » de sorte que, en position d'équilibre statique, l'orientation des biellettes 23 et 24 peut différer de l'orientation représenté sur la figure suivant un angle pouvant atteindre 5°.

De la même manière que précédemment, le centre instantané de rotation 25 défini par l'intersection des droite $d_1$ et $d_2$ passant respectivement par les axes

---

23a,23b de la biellette inférieure 23 et par les axes 24a, 24b de la biellette supérieure 24 est situé dans le quadrant antérieur supérieur du cadre 1.

Par ailleurs, en position d'équilibre statique, ledit centre instantané de rotation 25 se situe sur la droite prolongeant le brin tendu supérieure de la chaîne de transmission non représentée sur la figure 4.

De plus, lorsque la roue arrière rencontre un obstacle, le centre instantané de rotation 25 se déplace alors vers l'avant le long d'une trajectoire légèrement curviligne, c'est-à-dire une trajectoire curviligne présentant un grand rayon de courbure, dont la concavité est orientée vers le haut.

Enfin, le VTT comprend un amortisseur 26 dont les extrémités libres sont solidaires respectivement du tube oblique 3 et de l'extrémité distale du hauban 16 du bras oscillant 15 ou de la biellette supérieure 24.

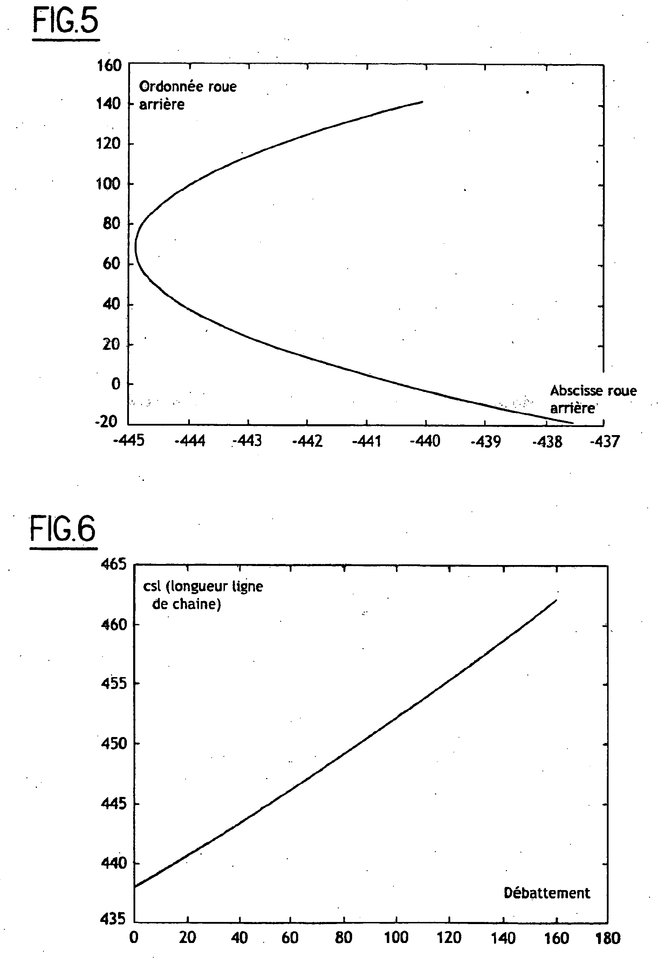

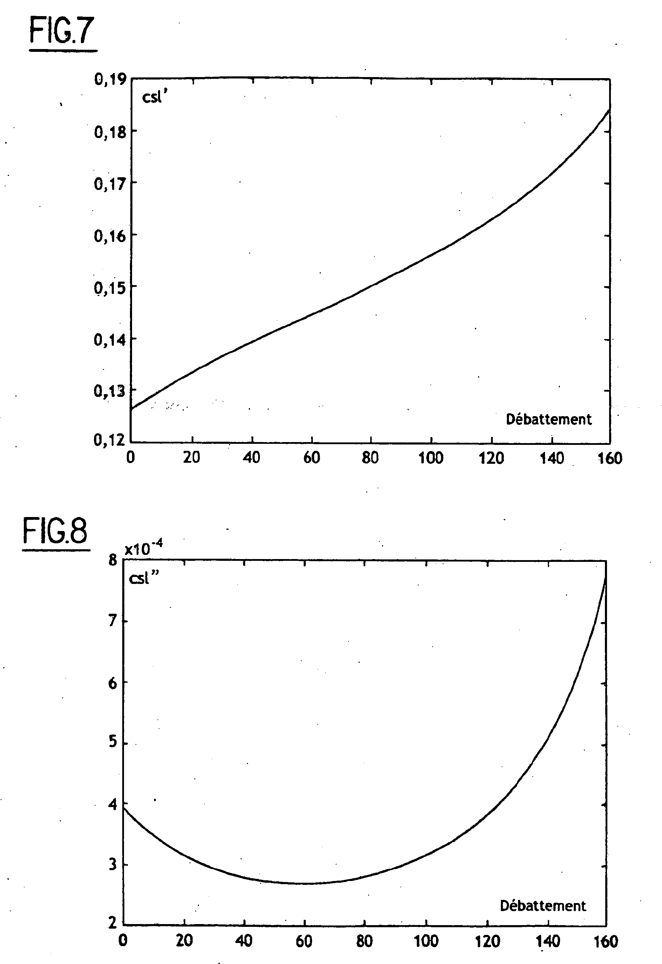

On observera, en référence à la figure 5, que la trajectoire de la roue arrière lorsque cette dernière rencontre un obstacle est une courbe curviligne ne comportant pas de point d'inflexion et dont la concavité est orientée vers l'avant du VTT. La longueur de la ligne de chaîne dite CSL selon l'acronyme anglo-saxon « Chain Stay Length » croit constamment en fonction du débattement D de la roue arrière. Par ailleurs, en référence à la figure 7, la dérivée première de la longueur de la ligne de chaîne par rapport au débattement, i.e. $\dfrac{d(CSL)}{d(D)}$ est une courbe strictement positive et croissant globalement linéairement. De plus, la dérivée seconde de la longueur de la ligne de chaîne CSL par rapport au débattement, i.e.

$\dfrac{d^2(CSL)}{d^2(D)}$ est une courbe strictement positive, décroissant pour un débattement compris entre 0 et 60mm et croissant pour un débattement compris entre 60 et 160mm.

De telles caractéristiques indiquent qu'un phénomène de « kick-back » peut apparaître lorsque la roue arrière rencontre un obstacle. On entend par « kick-back » le phénomène de rotation dans le sens inverse des pédales dû à une augmentation de la tension du brin supérieur de la chaîne. Néanmoins, l'accroissement de la longueur de la chaîne étant faible, ce phénomène de « kick-back » n'est pas perçu par le cycliste avec la suspension suivant l'invention.

Selon une dernière variante d'exécution, non représentée sur les figures, le premier moyen d'articulation 23 pourra consister en une biellette dite inférieure 23 dont les axes de rotation 23a et 23b positionnés aux extrémités libres de ladite biellette 23 sont respectivement articulés à l'extrémité distale du tube inférieur 17 du bras oscillant 15 et au tube de selle 2 à proximité du boîtier de pédalier 12, au niveau de l'axe du boîtier de pédalier 12, c'est-à-dire que l'axe de rotation 23b est soit confondu avec l'axe du boîtier de pédalier 12 soit positionné sur la droite horizontale H passant par l'axe dudit boîtier de pédalier 12, soit situé sous l'axe du boîtier de pédalier 12. Dans cette variante d'exécution, le boîtier de pédalier 12 comporte dans sa partie arrière un organe apte à recevoir l'axe de rotation 23b de la biellette inférieure 23.

L'Homme du Métier pourra aisément modifier les dimensions et la trajectoire des moyens d'articulation 23,24 afin d'obtenir une trajectoire du centre instantané de rotation 25 de telle sorte qu'il se déplace à l'intérieur d'une bande horizontale et que la distance entre ledit centre instantané de rotation 25 et le brin tendu supérieur de la chaîne de transmission 21, ou la droite la prolongeant, augmente lorsque le bras oscillant 15 se déplace vers le haut. L'Homme du Métier pourra s'aider notamment d'un programme d'ordinateur dans lequel il pourra intégré les différentes contraintes telles que les dimensions du cadre 1 et du bras oscillant 15, la forme du cadre 1 et du bras oscillant 15, la position des différents moyens d'articulation 23,24 du bras oscillant 15 sur le cadre 1 par rapport au boîtier de pédalier 12, etc...

Enfin, il va de soi que la suspension arrière conforme à l'invention peut être adaptée à tous les types de véhicules comportant un châssis, un bras oscillant portant l'axe du moyeu d'au moins une roue motrice, articulé au châssis et un amortisseur dont les extrémités sont solidaires respectivement du châssis et du bras oscillant, tel qu'une moto, un quad ou similaire et que les exemples que l'on vient de donner ne sont que des illustrations particulières en aucun cas limitatives quant aux domaines d'application de l'invention.

**Revendications**

1. Suspension arrière d'un vélocipède comportant un bras arrière oscillant (15) portant le moyeu (19) de la roue arrière (20) et articulé par au moins deux moyens d'articulation (23,24) à un cadre (1) portant un boîtier de pédalier (12), ledit vélocipède comportant une chaîne de transmission (21) s'étendant entre un pignon menant (13) dit plateau solidaire du boîtier de pédalier (12) et un pignon mené (22) solidaire de l'axe du moyeu (19) de la roue arrière (20), et le bras oscillant (15) pivotant autour d'un centre instantané de rotation (25) correspondant à l'intersection des droites ($d_1$,$d_2$) passant par les axes de rotation (23a,23b ;24a,24b) des moyens d'articulation respectifs du bras oscillant (15), ledit centre instantané de rotation (25) se situant à proximité du brin tendu supérieur de la chaîne (21), ou de la droite le prolongeant, en position d'équilibre statique et se déplaçant à l'intérieur d'une bande horizontale (27) de telle manière que ledit centre instantané de rotation (25) se déplace horizontalement lorsque le bras oscillant (15) se déplace vers le haut lors du franchissement d'un obstacle, **caractérisée en ce que** la distance entre ledit centre instantané de rotation

(25) et le brin tendu supérieur de la chaîne de transmission (21), ou la droite la prolongeant, augmente lorsque le bras oscillant (15) se déplace vers le haut pour créer un moment de rappel tendant à ramener le bras oscillant (15) dans sa position d'équilibre statique lors du pédalage, ledit moment de rappel étant proportionnel d'une part à la tension du brin tendu supérieur de la chaîne de la transmission (21) et d'autre part à la distance séparant le centre instantané de rotation (25) du brin supérieur de la chaîne de transmission (21) ou de la droite la prolongeant.

2. Suspension arrière suivant la revendication 1 **caractérisée en ce que** la bande (27) est délimitée par une droite supérieure (27a) et une droite inférieure (27b) s'étendant au dessus et respectivement en dessous du brin tendu supérieur de la chaîne (21), ou de la droite la prolongeant, en position d'équilibre statique.

3. Suspension arrière suivant la revendication 2 **caractérisée en ce que** la distance séparant la droite supérieure (27a) de la droite inférieure (27b) de la bande (27) est inférieure ou égale à la moitié du débattement vertical maximal du moyeu (19) de la roue arrière (20).

4. Suspension suivant l'une quelconque des revendications 1 à 3 **caractérisée en ce que** la distance entre ledit centre instantané de rotation (25) et le brin tendu supérieur de la chaîne de transmission (21), ou la droite la prolongeant, augmente linéairement lorsque le bras oscillant (15) se déplace vers le haut.

5. Suspension arrière suivant la revendication 4 **caractérisée en ce que** le centre instantané de rotation (25) décrit une trajectoire linéaire lorsque le bras oscillant (15) se déplace.

6. Suspension arrière suivant l'une quelconque des revendications 1 à 3 **caractérisée en ce que** la distance entre ledit centre instantané de rotation (25) et le brin tendu supérieur de la chaîne de transmission (21), ou la droite la prolongeant, augmente de manière non linéaire lorsque le bras oscillant (15) se déplace vers le haut.

7. Suspension arrière suivant la revendication 6 **caractérisée en ce que** le centre instantané de rotation (25) décrit une trajectoire curviligne dont la concavité est orientée vers le haut lorsque le bras oscillant (15) se déplace.

8. Suspension arrière suivant l'une quelconque des revendications précédentes **caractérisée en ce que** le centre instantané de rotation (25) se situe dans le quadrant antérieur.

9. Suspension arrière suivant l'une quelconque des revendications 1 à 7 **caractérisée en ce que** le centre instantané de rotation (25) se situe dans le quadrant postérieur.

10. Suspension arrière suivant la revendication 9 **caractérisée en ce que** le centre instantané se situe à l'arrière du moyeu (19) de la roue arrière (20).

11. Suspension arrière suivant l'une quelconque des revendications précédentes **caractérisée en ce que** les moyens d'articulation (23,24) du bras oscillant (15) consistent en deux biellettes, une biellette dite supérieure (24) articulée au tube de selle (2) du cadre (1) et une biellette inférieure (23) articulée audit tube de selle (2) à proximité du boîtier de pédalier (12).

12. Suspension arrière suivant la revendication 11 **caractérisée en ce que** la biellette inférieure (23) s'étend globalement horizontalement en position d'équilibre statique.

13. Suspension arrière suivant les revendications 11 et 12 **caractérisée en ce que** la biellette supérieure (24) s'étend globalement verticalement en position d'équilibre statique.

14. Suspension arrière suivant les revendications 11 et 12 **caractérisée en ce que** la biellette supérieure (24) s'étend globalement horizontalement en position d'équilibre statique.

**Claims**

1. A rear suspension of a bicycle including a rear swing arm (15) bearing the hub (19) of the rear wheel (20) and articulated by at least two articulation means (23, 24) to a frame (1) bearing a crankset bottom bracket (12), said bicycle including a transmission chain (21) extending between a driving sprocket wheel (13), a so-called chain ring, secured to the crankset bottom bracket (12) and a driven sprocket wheel (22) secured to the axle of the hub (19) of the rear wheel (20), and the swing arm (15) pivoting around an instantaneous centre of rotation (25) corresponding to the intersection of the straight lines $(d_1, d_2)$ passing through the axes of rotation (23a, 23b; 24a, 24b) of the respective articulation means of the swing arm (15), said instantaneous centre of rotation (25) being located close to the upper strand of the chain (21), or to the straight line which extends on from it, in a position of static equilibrium and moving inside a horizontal band (27) so that said instantaneous centre of rotation (25) moves horizontally when the swing arm (15) moves upwards upon going over an obstacle, **characterized in that** the distance between said instantaneous centre of rotation (25) and the upper strand of the transmission chain (21), or the straight line which extends on from it, increases when the swing arm (15) moves upwards, to create a restoring moment tending to bring the swing arm (15) back into its position of static equilibrium upon pedalling, said restoring moment being proportional to the tension of the upper strand of the transmission chain (21), on the one hand, and to the distance separating the instantaneous centre of rotation 25 from the upper length of the transmission chain (21) or from the straight line extending on from it, on the other hand.

2. The rear suspension according to claim 1, **characterized in that** the band (27) is delimited by an upper straight line (27a) and a lower straight line (27b) extending above and respectively below the upper strand of the chain (21), or the straight line which extends on from it, in a position of static equilibrium.

3. The rear suspension according to claim 2, **characterized in that** the distance separating the upper straight line (27a) from the lower straight line (27b) of the band (27) is less than or equal to half the maximum vertical displacement of the hub (19) of the rear wheel (20).

4. The suspension according to claim 1, **characterized in that** the distance between said instantaneous centre of rotation (25) and the upper strand of the transmission chain (21), or the straight line which extends on from it, increases linearly when the swing arm (15) moves upwards.

5. The rear suspension according to claim 4, **characterized in that** the instantaneous centre of rotation (25) follows a linear trajectory when the swing arm (15) moves.

6. The rear suspension according to any of the claims 1 to 3, **characterized in that** the distance between said instantaneous centre of rotation (25) and the upper strand of the transmission chain (21) or the straight line which extends on from it, increases non-linearly when the swing arm (15) moves upwards.

7. The rear suspension according to claim 6, **characterized in that** the instantaneous centre of rotation (25) follows a curvilinear trajectory, the concavity of which is oriented upwards when the swing arm (15) moves.

8. The rear suspension according to any of the previous claims, **characterized in that** the instantaneous centre of rotation (25) is located in the front quadrant.

9. The rear suspension according to any of the claims 1 to 7, **characterized in that** the instantaneous centre of rotation (25) is located in the rear quadrant.

10. The rear suspension according to claim 9, **characterized in that** the instantaneous centre is located at the rear of the hub (19) of the rear wheel (20).

11. The rear suspension according to claim 1, **characterized in that** the articulation means (23, 24) of the swing arm (15) consist in two connecting rods, a so-called upper connecting rod (24) articulated to the saddle tube (2) of the frame (1) and a lower connecting rod (23) articulated to said saddle tube (2) close to the crankset bottom bracket (12).

12. The rear suspension according to claim 11, **characterized in that** the lower connecting rod (23) globally extends horizontally in a position of static equilibrium.

13. The rear suspension according to claims 11 and 12, **characterized in that** the upper connecting rod (24) globally extends vertically in a position of static equilibrium.

14. The rear suspension according to claims 11 and 12, **characterized in that** the upper connecting rod (24) globally extends horizontally in a position of static equilibrium.

**Patentansprüche**

1. Hinterradaufhängung für ein Fahrrad, aufweisend einen hinteren Schwingarm (15), der die Nabe (19) des Hinterrads (20) trägt und über mindestens zwei Gelenkeinrichtungen (23,24) mit einem Rahmen (1) gelenkig verbunden ist, der ein Tretkurbelgehäuse (12) trägt, wobei das Fahrrad eine Antriebskette (21) aufweist, die sich zwischen einem mit dem Tretkurbelgehäuse (12) fest verbundenen antreibenden Ritzel (13), genannt Platte, und einem mit der Achse der Nabe (19) des Hinterrads (20) fest verbundenen angetriebenen Ritzel (22) erstreckt, und wobei sich der Schwingarm (15) um ein momentanes Drehzentrum (25) dreht, das dem Schnittpunkt von Geraden $(d_1,d_2)$ entspricht, die durch die Drehachsen (23$\underline{a}$, 23$\underline{b}$,24$\underline{a}$,24$\underline{b}$) der jeweiligen Gelenkeinrichtungen des Schwingarms (15) hindurchgehen, wobei das momentane Drehzentrum (25) in einer statischen Gleichgewichtsposition in der Nähe des gespannten Oberstrangs der Kette (21) oder der ihn verlängernden Geraden angeordnet ist und sich innerhalb eines horizontalen Streifens (27) verschiebt, derart, dass sich das momentane Drehzentrum (25) horizontal verschiebt, wenn beim Überfahren eines Hindernisses der Schwingarm (15) sich nach oben bewegt, **dadurch gekennzeichnet, dass**, wenn sich der Schwingarm (15) nach oben bewegt, sich der Abstand zwischen dem momentanen Drehzentrum (25) und dem gespannten Oberstrang der Antriebskette (21) oder der sie verlängernden Geraden vergrößert, um ein Rückstellmoment zu erzeugen, das danach strebt, bei einem Tritt in die Pedale den Schwingarm (15) in seine statische Gleichgewichtsposition zurückzuführen, wobei das Rückstellmoment proportional ist einerseits zu der Spannung des gespannten Oberstrangs der Antriebskette (21) und andererseits zu dem Abstand zwischen dem momentanen Drehzentrum (25) und dem Oberstrang der Antriebskette (21) oder der sie verlängernden Geraden.

2. Hinterradaufhängung nach Anspruch 1, **dadurch gekennzeichnet, dass** in einer statischen Gleichgewichtsposition der Streifen (27) von einer oberen Geraden (27a) und einer unteren Geraden (27b), die sich oberhalb bzw. unterhalb des gespannten Oberstrangs der Kette (21) oder der sie verlängernden Geraden erstrecken, begrenzt wird.

3. Hinterradaufhängung nach Anspruch 2, **dadurch gekennzeichnet, dass** der Abstand zwischen der oberen Geraden (27a) und der unteren Geraden (27b) des Streifens (27) kleiner oder gleich der Hälfte der maximalen vertikalen Ausfederung der Nabe (19) des Hinterrads (20) ist.

4. Hinterradaufhängung nach einem der Ansprüche 1 bis 3, **dadurch gekennzeichnet, dass** sich der Abstand zwischen dem momentanen Drehzentrum (25) und dem gespannten Oberstrang der Antriebskette (21) oder der sie verlängernden Geraden linear vergrößert, wenn sich der Schwingarm (15) nach oben bewegt.

5. Hinterradaufhängung nach Anspruch 4, **dadurch gekennzeichnet, dass** das momentane Drehzentrum (25) eine lineare Trajektorie beschreibt, wenn sich der Schwingarm (15) bewegt.

6. Hinterradaufhängung nach einem der Ansprüche 1 bis 3, **dadurch gekennzeichnet, dass** sich der Abstand zwischen dem momentanen Drehzentrum (25) und dem gespannten Oberstrang der Antriebskette (21) oder der sie verlängernden Geraden auf nicht-lineare Weise vergrößert, wenn sich der Schwingarm (15) nach oben bewegt.

7. Hinterradaufhängung nach Anspruch 6, **dadurch gekennzeichnet, dass** das momentane Drehzentrum (25) eine gekrümmte Trajektorie, deren Konkavität nach oben gerichtet ist, beschreibt, wenn sich der Schwingarm (15) bewegt.

8. Hinterradaufhängung nach einem der vorstehenden Ansprüche, **dadurch gekennzeichnet, dass** das momentane Drehzentrum (25) in dem vorderen Quadranten angeordnet ist.

9. Hinterradaufhängung nach einem der Ansprüche 1 bis 7, **dadurch gekennzeichnet, dass** das momentane Drehzentrum (25) in dem hinteren Quadranten angeordnet ist.

10. Hinterradaufhängung nach Anspruch 9, **dadurch gekennzeichnet, dass** das momentane Drehzentrum hinter der Nabe (19) des Hinterrads (20) angeordnet ist.

11. Hinterradaufhängung nach einem der vorstehenden Ansprüche, **dadurch gekennzeichnet, dass** die Gelenkeinrichtungen (23,24) des Schwingarms (15) aus zwei Pleuelstangen bestehen, nämlich einer sogenannten oberen Pleuelstange (24), die gelenkig mit dem Sattelrohr (2) des Rahmens (1) verbunden ist, und einer unteren Pleuelstange (23), die in der Nähe des Tretkurbelgehäuses (12) gelenkig mit dem Sattelrohr (2) verbunden ist.

12. Hinterradaufhängung nach Anspruch 11, **dadurch gekennzeichnet, dass** sich in einer statischen Gleichgewichtsposition die untere Pleuelstange (23) im Allgemeinen horizontal erstreckt.

13. Hinterradaufhängung nach Anspruch 11 und 12, **dadurch gekennzeichnet, dass** sich in einer statischen Gleichgewichtsposition die obere Pleuelstange (24) im Allgemeinen vertikal erstreckt.

14. Hinterradaufhängung nach Anspruch 11 und 12, **dadurch gekennzeichnet, dass** sich in einer statischen Gleichgewichtsposition die obere Pleuelstange (24) im Allgemeinen horizontal erstreckt.

FIG.1

EP 1 996 450 B1

# FIG.2

FIG.3

EP 1 996 450 B1

FIG.4

## FIG.5

160 — 

Ordonnée roue
arrière

140 —

120 —

100 —

80 —

60 —

40 —

20 —

0 —

Abscisse roue
arrière

-20 —

-445   -444   -443   -442   -441   -440   -439   -438   -437

## FIG.6

465 —

csl (longueur ligne
de chaîne)

460 —

455 —

450 —

445 —

440 —

Débattement

435 —

0     20    40    60    80    100   120   140   160   180

## FIG.7

## FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020109332 A

- WO 9818671 A